# EUROPÄISCHE PATENTSCHRIFT

(11) **EP 1 404 537 B1**
(45) Veröffentlichungstag und Bekanntmachung des Hinweises auf die Patenterteilung: **17.11.2004**
(21) Anmeldenummer: 02745090.7
(22) Anmeldetag: 25.05.2002
(51) Int. Cl.: B60H 1/32, B60H 1/00

(54) **VERFAHREN ZUM BETRIEB EINER KLIMAANLAGE**
METHOD OF OPERATING AN AIR CONDITIONING INSTALLATION
PROCEDE PERMETTANT DE FAIRE FONCTIONNER UN SYSTEME DE CLIMATISATION

(30) Priorität: 25.06.2001 DE 10130545
(43) Veröffentlichungstag der Anmeldung: 07.04.2004
(73) Patentinhaber: ROBERT BOSCH GMBH, 70442 Stuttgart (DE)
(72) Erfinder: LEUTHNER, Stephan, 70372 Stuttgart (DE)
(86) Internationale Anmeldenummer: PCT/DE2002/001929
(87) Internationale Veröffentlichungsnummer: WO 2003/000514

(56) Entgegenhaltungen:
- EP-A- 1 000 784
- DE-C- 19 813 674
- US-A- 4 532 806
- US-A- 5 051 645

## Beschreibung

### Stand der Technik

Die Erfindung geht aus von einem Verfahren zum Betrieb einer Fahrzeugklimaanlage nach dem Oberbegriff des Anspruchs 1, wie zum Beispiel offenbart aus DE 198 13 674.

Der Einsatz verbrauchsoptimierter Brennkraftmaschinen in Fahrzeugen wirkt sich auch auf deren Klimatisierung aus, indem in bestimmten Betriebsbereichen, z.B. bei niedrigen Außentemperaturen während der Startphase, nicht mehr genügend Wärme an die Kühlflüssigkeit abgegeben wird, um das Fahrzeug komfortabel zu beheizen. Es sind deshalb Zuheizer notwendig, um den Komfort bei niedrigen Temperaturen sicherzustellen bzw. bei Bedarf auch die Fahrzeugscheiben enteisen zu können. Als Zuheizer kann auch eine Klimaanlage dienen, zumal zunehmend mehr Fahrzeuge standardmäßig mit einer Klimaanlage ausgestattet werden. Die Klimaanlage wird bei niedrigen Temperaturen durch eine Umkehr des Kältemittelkreislaufs als Wärmepumpe genutzt, wobei ein so genannter Gaskühler, der Teil einer CO₂-Klimanalage ist, im Heizmodus Wärme aus der Umgebung aufnimmt. Die Wärmepumpe verbraucht relativ wenig Energie und besitzt ein spontanes Ansprechverhalten bei hoher Heizleistung. Ein wesentlicher Nachteil einer solchen Wärmepumpe besteht allerdings darin, dass der Gaskühler bei niedrigen Außentemperaturen auf der Luftseite vereist. Der in der Luftströmung in der Regel nachgeschaltete Kühler der Brennkraftmaschine wird dadurch nur unzureichend von Kühlluft durchströmt, so dass dann eine ausreichende Kühlung der Brennkraftmaschine bei kurzfristiger Leistungssteigerung, z.B. bei Auffahrt auf eine Autobahn, nicht mehr gewährleistet ist.

Aus der EP 0 945 291 A1 sind eine Vorrichtung und ein Verfahren zum Heizen und Kühlen eines Nutzraums eines Kraftfahrzeugs bekannt. Das Kältemittel wird im Heizbetrieb von einem Verdichter komprimiert und gelangt über ein 3/2-Wegeventil zu einem Innenraumwärmetauscher, in dem es einen Teil der durch die Kompression erzeugten Wärme an die kältere Fahrzeuginnenraumluft abgibt. Vom Innenraumwärmetauscher strömt das Kältemittel zu einer Expansionseinrichtung, in der es so weit abgekühlt wird, dass es an einem nachfolgend angeordneten Gaskühler Wärme aus der Umgebungsluft aufnehmen kann. Weitere Wärme könnte dem Kältemittel in einem nachgeschalteten Abgaswärmetauscher zugeführt werden, der mit heißen Abgasen der Brennkraftmaschine beaufschlagt wird.

Vom Abgaswärmetauscher gelangt das Kältemittel wieder zum Verdichter, wodurch der Kältemittelkreislauf geschlossen ist. Wird das Kältemittel in der Expansionseinrichtung auf eine Temperatur expandiert, die unterhalb der Umgebungstemperatur liegt, kann die den Gaskühler durchströmende Luft auf eine Temperatur unterhalb der Sättigungstemperatur abgekühlt werden. In diesem Fall kondensiert Wasser aus der angesaugten Umgebungsluft. Liegt die Temperatur unterhalb der Sublimationslinie des Wassers, geht dieses in den festen Zustand über und der Gaskühler vereist. Da der Gaskühler in der Regel einem Kühler der Brennkraftmaschine in Strömungsrichtung der Luft vorgeschaltet ist, wird durch ein Vereisen des Gaskühlers eine ordnungsgemäße Kühlung der Brennkraftmaschine gefährdet. Um ein zu starkes Vereisen zu vermeiden, wird daher bei kritischen Umgebungsbedingungen über ein 3/2-Wegeventil eine Bypassleitung geöffnet, so dass der Gaskühler kurz geschlossen ist. Das Kältemittel strömt unter Umgehung des Gaskühlers direkt zum Abgaswärmetauscher und von dort zur Saugseite des Verdichters. Des Weiteren ist ein Prozess denkbar, in dem der Kreislauf dann als Heißgasprozess gestaltet wird, wobei dann ausschließlich die Kompressionswärme des Verdichters als Wärmequelle verwendet wird.

### Vorteile der Erfindung

Nach dem erfindungsgemäßen Verfahren wird im Heizbetrieb das Schaltventil in der Bypassleitung, die dem Gaskühler zugeordnet ist, geöffnet und der Durchfluss von Kältemittel durch den Gaskühler unterbrochen, sobald sich auf der Luftseite des Gaskühlers eine Eisschicht gebildet hat, die eine Grenzdicke überschreitet. Sofern der Luftstrom auf der Luftseite des Gaskühlers eine Temperatur oberhalb des Gefrierpunkts besitzt, wird die Eisschicht abgetaut und vom Luftstrom entfernt. Aber auch bei Temperaturen des Luftstroms unterhalb des Gefrierpunkts verdampft die Eisschicht, so dass der Gaskühler nach einiger Zeit wieder als Wärmequelle verwendet werden kann. Dadurch sind die Betriebszeiten während des Heizbetriebs, in denen der Gaskühler nicht als Wärmequelle dient, auf ein Minimum reduziert. Die zur Verfügung stehende Wärmemenge ist somit so groß, dass in der Regel auf weitere Wärmetauscher, z.B. Abgaswärmetauscher, verzichtet werden kann.

Da sich durch die Eisschicht am Gaskühler der Strömungswiderstand des Gaskühlers erhöht, kann der Druckabfall auf der Luftseite des Gaskühlers als Maß für die Vereisung bei kritischen Umgebungstemperaturen ausgewertet werden. Überschreitet der Druckabfall bei kritischen Umgebungstemperaturen einen vorgegebenen Grenzwert, wird der Kältemittelstrom über die Bypassleitung geleitet, indem eine entsprechende elektronische Auswerteeinheit jeweils ein Schaltventil in der Bypassleitung und/oder dem Zulauf oder Ablauf zum Gaskühler steuert.

Eine andere Möglichkeit besteht darin, dass auf der Luftseite des Gaskühlers ein kapazitiver oder resistiver Sensor angeordnet ist, dessen Kapazität bzw. Widerstand sich durch die Eisschicht ändert. Überschreitet das Signal des Sensors bei kritischen Umgebungsparametern einen Grenzwert, wird der Kältemittelstrom über die Bypassleitung geleitet. Als kritische Umgebungsparameter sind insbesondere niedrige Umgebungstemperaturen und eine hohe relative Luftfeuchtigkeit anzusehen.

### Zeichnung

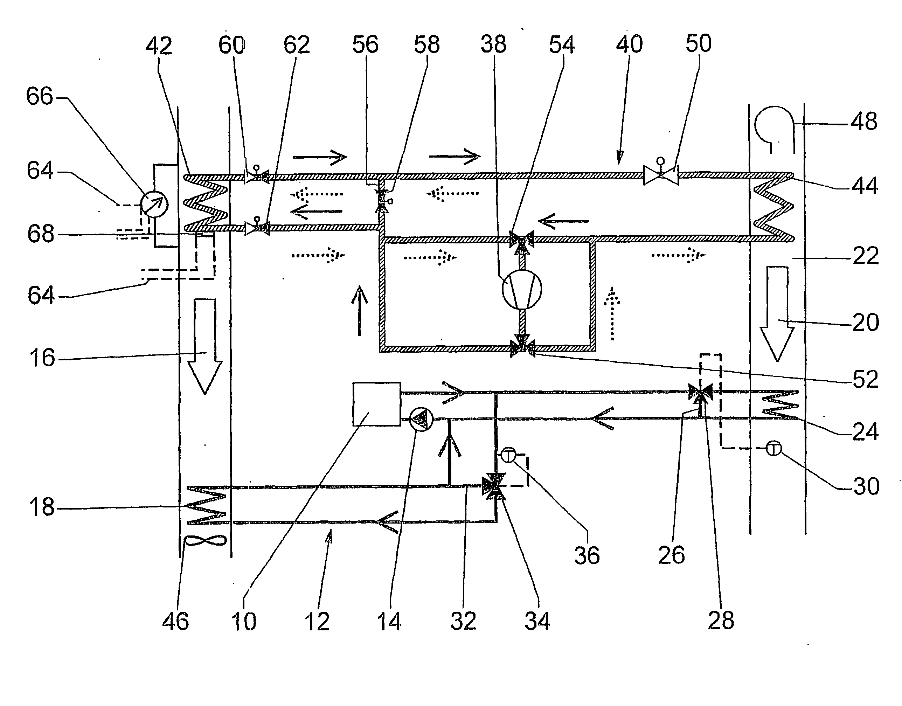

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Die einzige Figur zeigt einen schematischen Aufbau einer erfindungsgemäßen Klimaanlage.

### Beschreibung des Ausführungsbeispiels

Ein nicht näher dargestelltes Fahrzeug besitzt eine Brennkraftmaschine 10 mit einem Kühlflüssigkeitskreislauf 12. In diesem fördert eine Kühlflüssigkeitspumpe 14 Kühlflüssigkeit durch die Brennkraftmaschine 10, einen Heizungswärmetauscher 24 und einen Kühler 18. Parallel zum Heizungswärmetauscher 24 ist eine Bypassleitung 26 vorgesehen. Ein Heizungsregelventil 28 teilt den Kühlmittelstrom in Abhängigkeit eines Signals eines Temperatursensors 30 auf den Heizungswärmetauscher 24 und die Bypassleitung 26 auf.

Parallel zum Kühler 18 ist ebenfalls eine Bypassleitung 32 vorgesehen, wobei der Kühlmittelstrom von einem weiteren Dreiwegeventil 34 in Abhängigkeit von dem Signal eines weiteren Temperatursensors 36 aufgeteilt wird.

Das Fahrzeug besitzt ein Klimagerät 22 zur Klimatisierung eines Fahrzeuginnenraums. In dem Klimagerät 22 ist ein Innenraumwärmetauscher 44 dem Heizungswärmetauscher 24 in Richtung einer Klimaströmung 20 vorgeschaltet. Die Klimaströmung 20 wird von einem Gebläse 48 erzeugt, das entweder Frischluft aus der Umgebung oder Umluft aus dem Fahrzeuginnenraum ansaugt und den Heizungswärmetauscher 24 und den Innenraumwärmetauscher 44 beaufschlagt.

Der Innenraumwärmetauscher 44 ist Bestandteil eines Kältemittelkreislaufs 40, dessen Kältemittel, z.B. CO₂, von einem Verdichter 38 gefördert wird. Der Kältemittelkreislauf 40 kann in einem Heizbetrieb oder Kühlbetrieb gefahren werden. Im Kühlbetrieb fördert der Verdichter 38 über ein Dreiwegeventil 52 das verdichtete Kältemittel in Richtung der schwarz ausgezogenen Pfeile über ein Schaltventil 62, einen Gaskühler 42, ein weiteres Schaltventil 60 und eine Expansionseinrichtung 50 zum Innenraumwärmetauscher 44 und von dort über ein weiteres Dreiwegeventil 54 zur Saugseite des Verdichters 38 zurück. Das verdichtete Kältemittel wird im Gaskühler 42 durch eine Luftströmung 16 gekühlt, die von einem Lüfter 46 erzeugt wird und sowohl den Gaskühler 42 als auch den nachgeschalteten Kühler 18 der Brennkraftmaschine 10 beaufschlagt. In der Expansionseinrichtung 50 wird das Kältemittel auf eine gewünschte Temperatur expandiert, so dass es im folgenden Innenraumwärmetauscher 44 eine entsprechende Wärmemenge aus der Klimaströmung 20 aufnehmen kann.

In dem Heizbetrieb wird das Dreiwegeventil 52 so verstellt, dass der Verdichter 38 das verdichtete Kältemittel in Richtung der punktierten Pfeile zunächst dem Innenraumwärmetauscher 44 zuführt und dort Wärme, die durch die Kompression des Kältemittels entsteht, auf die Klimaströmung 20 überträgt. Dies geschieht insbesondere in Betriebsbereichen, in denen dem Heizungswärmetauscher 24 keine ausreichende Wärmemenge aus dem Kühlmittelkreislauf 12 zur Verfügung steht. Nach dem Innenraumwärmetauscher 44 wird das Kältemittel in der Expansionseinrichtung 50 expandiert, so dass es beim Durchströmen des sich anschließenden Gaskühlers 42 Wärme aus der Luftströmung 16 aufnehmen kann. Das erwärmte Kältemittel strömt über das entsprechend verstellte Dreiwegeventil 54 zur Saugseite des Verdichters 38 zurück.

Bei kritischen Umgebungsparametern, insbesondere bei niedrigen Außentemperaturen und einer hohen Luftfeuchtigkeit besteht die Gefahr, dass sich am Gaskühler 42 eine Eisschicht bildet, die die Luftströmung 16 behindert, so dass die Kühlung der Brennkraftmaschine 10 über den Kühler 18 gefährdet sein könnte. Um zu verhindern, dass die Eisbildung ein unzulässiges Maß überschreitet, öffnet ein Schaltventil 58 eine Bypassleitung 56 und der Durchfluss von Kältemittel durch den Gaskühler 42 wird durch ein Schaltventil 62 und/oder 60 am Gaskühler 42 unterbrochen, sobald sich auf der Luftseite des Gaskühlers 42 eine Eisschicht gebildet hat, die eine Grenzdicke überschreitet. In diesem Betriebsbereich wird der Kältemittelkreislauf 40 im so genannten "Heißgasbetrieb" gefahren, bei dem das Kältemittel in der Expansionseinrichtung 50 nicht oder nur geringfügig entspannt wird und im Innenraumwärmetauscher 44 nur die Kompressionswärme des Verdichters 38 genutzt wird. In dem Heißgasbetrieb wird die Eisschicht durch die Luftströmung 16 abgetaut oder verdampft, so dass nach einer gewissen Zeit wieder im Wärmepumpenbetrieb gefahren werden kann, indem das Schaltventil 58 schließt und die Schaltventile 60, 62 öffnen.

Da sich der Durchflusswiderstand durch den Gaskühler 42 auf der Luftseite mit Zunahme der Eisschicht vergrößert und damit der Druckabfall am Gaskühler 42 zunimmt, wird der Druckabfall mittels eines Druckdifferenzsensors 66 erfasst und über Signalleitungen 62 einer nicht näher dargestellten Auswerteeinheit zugeführt, die in Abhängigkeit des Sensorsignals und der Umgebungsparameter die Schaltventile 58, 60, 62 sowie die Expansionseinrichtung 50 ansteuert. Anstelle des Druckdifferenzsensors 66 oder zusätzlich dazu kann am Gaskühler 42 ein Sensor 68 angeordnet sein, der nach einem kapazitiven oder resistiven Wirkprinzip arbeitet, wobei sich die Kapazität bzw. der elektrische Widerstand des Sensors 68 beim Auftreten einer Eisschicht und/oder mit der Zunahme der Eissicht ändert. Das Signal des Sensors 68 wird ebenfalls über Signalleitungen 64 der Auswerteeinheit zugeleitet.

### Bezugszeichen

- 10: Brennkraftmaschine
- 12: Kühlflüssigkeitskreislauf
- 14: Kühlflüssigkeitspumpe
- 16: Luftströmung
- 18: Kühler
- 20: Klimaströmung
- 22: Klimagerät
- 24: Heizungswärmetauscher
- 26: Bypassleitung
- 28: Heizungsregelventil
- 30: Temperatursensor
- 32: Bypassleitung
- 34: Dreiwegeventil
- 36: Temperatursensor
- 38: Verdichter
- 40: Kältemittelkreislauf
- 42: Gaskühler
- 44: Innenraumwärmetauscher
- 46: Lüfter
- 48: Gebläse
- 50: Expansionseinrichtung
- 52: Dreiwegeventil
- 54: Dreiwegeventil
- 56: Bypassleitung
- 58: Schaltventil
- 60: Schaltventil
- 62: Schaltventil
- 64: Signalleitung
- 66: Druckdifferenzsensor
- 68: Sensor

## Patentansprüche

1. Verfahren zum Betrieb einer Fahrzeugklimaanlage, bei der ein Verdichter (38) während eines Kühlbetriebs ein Kältemittel über einen Gaskühler (42) sowie eine Expansionseinrichtung (50) zu einem Innenraumwärmetauscher (44) fördert und während eines Heizbetriebs das Kältemittel in umgekehrter Strömungsrichtung zunächst durch den Innenraumwärmetauscher (44), die Expansionseinrichtung (50) und dann durch den Gaskühler (42) fördert, zu dem parallel eine Bypassleitung (56) mit einem Schaltventil (58) vorgesehen ist, **dadurch gekennzeichnet, dass** im Heizbetrieb das Schaltventil (58) in der Bypassleitung (56) geöffnet und der Durchfluss von Kältemittel durch den Gaskühler (42) unterbrochen wird, sobald sich auf der Luftseite des Gaskühlers (42) eine Eisschicht gebildet hat, die eine Grenzdicke überschreitet.

2. Verfahren nach Anspruch 1, **dadurch gekennzeichnet, dass** der Druckabfall auf der Luftseite des Gaskühlers (42) gemessen wird und bei kritischen Umgebungsparametern der Kältemittelstrom über die Bypassleitung (56) geleitet wird, wenn der Druckabfall einen Grenzwert überschreitet.

3. Verfahren nach einem der vorhergehenden Ansprüche, **dadurch gekennzeichnet, dass** auf der Luftseite des Gaskühlers (42) ein kapazitiver oder resistiver Sensor (68) angeordnet ist, dessen Kapazität bzw. Widerstand sich durch die Eisschicht ändert, und dass bei kritischen Umgebungsparametern der Kältemittelstrom über die Bypassleitung (56) geleitet wird, wenn das Signal des Sensors (68) einen Grenzwert überschreitet.

## Claims

1. Method for operating a vehicle air-conditioning system in which, during a cooling mode, a compressor (38) feeds a coolant via a gas cooler (42) and an expansion device (50) to a passenger compartment heat exchanger (44) and, during a heating mode, firstly feeds the coolant in the reverse direction of flow through the passenger compartment heat exchanger (44), the expansion device (50) and then through the gas cooler (42), in parallel with which a bypass line (56) with a switching valve (58) is provided, **characterized in that**, in the heating mode, the switching valve (58) opens in the bypass line (56) and the throughflow of coolant through the gas cooler (42) is interrupted as soon as a layer of ice which exceeds a limiting thickness has formed on the air side of the gas cooler (42).

2. Method according to Claim 1, **characterized in that** the drop in pressure on the air side of the gas cooler (42) is measured, and in the case of critical ambient parameters the stream of coolant is directed via the bypass line (56) if the drop in pressure exceeds a limiting value.

3. Method according to one of the preceding claims, **characterized in that** a capacitive or resistive sensor (68), whose capacitance or resistance changes as a result of the layer of ice, is arranged on the air side of the gas cooler (42), and **in that** in the case of critical ambient parameters the stream of coolant is directed via the bypass line (56) if the signal of the sensor (68) exceeds a limiting value.

## Revendications

1. Procédé de gestion d'une installation de climatisation de véhicule comportant un compresseur (38) qui débite un agent frigorifique à travers un radiateur à gaz (42) et un dispositif d'expansion (40) vers un échangeur de chaleur d'habitacle (44) pendant le mode de refroidissement et qui débite l'agent frigorifique dans le sens de circulation inverse pendant le mode de chauffage, en passant tout d'abord à travers l'échangeur de chaleur de l'habitacle (44) puis l'installation d'expansion (50) et ensuite par le radiateur à gaz (42), avec en parallèle une conduite de dérivation (56) munie d'une soupape de commutation (58),
**caractérisé en ce qu'**
en mode de chauffage, la soupape de commutation (58) de la conduite de dérivation (56) est ouverte et le passage de l'agent frigorifique à travers le radiateur de gaz (42) est coupé dès qu'une couche de givre dépassant une épaisseur limite se forme du côté de l'air dans le radiateur à gaz (42)

2. Procédé selon la revendication 1,
**caractérisé en ce qu'**
on mesure la chute de pression du côté de l'air du radiateur de gaz (42) et en cas de paramètres ambiants critiques, on fait passer le flux d'agent frigorifique par la conduite de dérivation (56) si la chute de pression dépasse une valeur limite.

3. Procédé selon l'une des revendications précédentes,
**caractérisé en ce que**
du côté de l'air du radiateur à gaz (42) on a un capteur capacitif ou résistif (68) dont la capacité et la résistance changent sous l'effet d'une couche de givre et en cas de paramètres ambiants critiques, le flux d'agent frigorifique est conduit à travers la conduite de dérivation (56) si le signal du capteur (68) dépasse une valeur limite.
